# FASCICULE DE BREVET EUROPEEN

(11) **EP 4 378 834 B1**
(45) Date de publication et mention de la délivrance du brevet: **15.01.2025**
(21) Numéro de dépôt: 23200826.8
(22) Date de dépôt: 29.09.2023
(51) Int. Cl.: B64D 45/00, G01G 19/14, G05D 1/00, B64D 1/22, B64F 5/60

(54) **PROCÉDÉ DE PARAMÉTRAGE DE LA MASSE D'UNE CHARGE À TRANSPORTER PAR UN AÉRONEF**
VERFAHREN ZUR PARAMETRIERUNG DER MASSE EINER VON EINEM LUFTFAHRZEUG ZU TRANSPORTENDEN LAST
METHOD FOR PARAMETERIZING THE MASS OF A LOAD TO BE TRANSPORTED BY AN AIRCRAFT

(30) Priorité: 30.11.2022 FR 2212539
(43) Date de publication de la demande: 05.06.2024
(73) Titulaire: Airbus Helicopters, 13725 Marignane Cedex (FR); AIRBUS HELICOPTERS DEUTSCHLAND GmbH, 86609 Donauwörth (DE)
(72) Inventeur: RAZAFIMAHEFA, Thomas, 13250 SAINT CHAMAS (FR); GAVIOS, Damien, 13190 ALLAUCH (FR); BOUCHARD, Pierre, 13180 GIGNAC-LA-NERTHE (FR); OCKIER, Carl, 86153 AUGSBURG (DE)
(74) Mandataire: GPI Brevets

(56) Documents cités:
- EP-B1- 1 904 564
- WO-A1-2021/070441
- US-A1- 2022 100 463

## Description

La présente invention concerne un procédé et un logiciel de paramétrage de la masse d'une charge à transporter par un aéronef, un procédé de calcul d'une masse totale d'un aéronef, un procédé de pilotage d'un aéronef, et un aéronef.

Un aéronef peut être à même de porter une charge, une telle charge étant dénommée « charge à transporter » par la suite. Par exemple, un aéronef à voilure tournante peut comprendre un système d'accrochage pour porter des charges. Un système d'accrochage peut comprendre un crochet, éventuellement suspendu à un système de suspension, par exemple du type connu sous la dénomination « swing », ou à un système de treuillage, possiblement via à une élingue.

A chaque instant, la masse totale de l'aéronef est donc fonction notamment de la masse de la charge à transporter.

De plus, le système avionique de l'aéronef peut prendre en considération cette masse totale. Par exemple, un système de pilotage automatique peut piloter l'aéronef en prenant en considération la masse totale. Eventuellement, le système avionique peut évaluer la quantité de carburant restant à l'issue de la mission. Le système avionique de l'aéronef peut prendre en considération cette masse totale pour calculer des limites à respecter, voire des marges par rapport à ces limites. Le système avionique peut calculer une puissance maximale ou un couple moteur maximal développable par un moteur de l'aéronef, etc.

Selon un procédé connu, la masse de la charge à transporter par un aéronef est renseignée dans le système avionique par l'équipage. Cet équipage manoeuvre une ou des interfaces homme-machine pour paramétrer cette masse. Selon un exemple, le système avionique de l'aéronef peut comprendre un dispositif multifonction comprenant un afficheur et diverses interfaces. L'afficheur peut afficher diverses pages, et notamment une page de gestion de véhicule dite « Vehicle Management System » en langue anglaise et connue sous l'acronyme VMS. Un équipage peut alors manoeuvrer une interface pour afficher cette page de gestion de véhicule sur l'afficheur. L'équipage peut ensuite manoeuvrer une interface pour atteindre sur cette page de gestion de véhicule la masse à renseigner, puis peut manoeuvrer une interface pour paramétrer cette masse. L'équipage manoeuvre ensuite une interface pour valider la masse paramétrée. Cette masse paramétrée est alors prise en compte par le système avionique, par exemple pour calculer une ou des limites à respecter et générer des alertes si la ou les limites ne sont pas respectées.

Eventuellement, le système d'accrochage peut comporter un senseur de masse pour mesurer la masse de la charge à transporter. Dans ce cas, la masse mesurée peut être affichée sur l'afficheur dans une autre page que la page de gestion de véhicule. Le pilote peut alors consulter cette autre page afin de visualiser la masse mesurée, puis peut basculer sur la page de gestion de véhicule pour appliquer la procédure précédente.

Cette procédure est ainsi efficace, mais a un impact sur la charge de travail de l'équipage. Or, cette charge de travail est relativement élevée lors de la fixation de la charge à transporter à un système d'accrochage ou lors d'un déchargement. Le pilote doit piloter finement l'aéronef. Le paramétrage de la masse de la charge à transporter est alors délicat à réaliser.

Si l'équipage réalise une mission durant laquelle l'aéronef embarque et débarque plusieurs fois des charges, l'équipage est alors obligé de paramétrer une nouvelle masse de la charge à transporter à chaque embarquement/débarquement d'une charge à transporter. Cette procédure est d'autant plus contraignante lorsque l'aéronef fait des allers-retours courts.

Dans ces conditions, un équipage peut affecter une masse élevée à la charge à transporter par sécurité, afin d'être certain d'avoir une marge par rapport aux limites calculées et utilisées par le système avionique. Le calcul des performances de l'aéronef n'est alors de fait pas optimisé.

Les documents FR 2 585 823 A1 et FR 2 575 550 A1 décrivent un système sollicitant un capteur de charge.

Le document US 3 754 440 décrit un système pour déterminer une marge de portance.

Le document EP 1 904 564 B1 décrit un procédé de gestion d'une charge.

Les documents US 2022/100463 A1, et WO 2021/070441 A1 sont aussi connus et éloignés de la présente divulgation.

La présente invention a alors pour objet de proposer un procédé de paramétrage pour paramétrer une masse d'une charge à transporter par un aéronef, en optimisant la charge de travail de l'équipage.

L'invention vise ainsi un procédé pour paramétrer dans un aéronef une masse de calcul prise en considération par un système avionique de l'aéronef, la masse de calcul étant relative à une charge à transporter portée par un système d'accrochage de l'aéronef, ledit système avionique ayant un afficheur.

Ce procédé comporte les étapes suivantes :
- détection qu'un état courant de l'aéronef est un état de vol avec la charge à transporter attachée au système d'accrochage,
- sous condition que ledit état courant soit l'état de vol avec la charge à transporter attachée au système d'accrochage, affichage sur ledit afficheur d'une proposition de masse,
- suite à l'affichage sur ledit afficheur d'une proposition de masse, validation de la proposition de masse à l'aide d'une interface de validation, la proposition de masse étant affectée à la masse de calcul, ou
- en l'absence d'une validation de la proposition de masse à l'issue d'une condition prédéterminée, affection d'une masse prédéterminée supérieure à zéro à la masse de calcul.

Ainsi, dès que l'aéronef se trouve dans une configuration particulière dite « état de vol avec la charge à transporter attachée au système d'accrochage », le système avionique affiche automatiquement une proposition de masse. L'afficheur affiche cette proposition de masse par exemple sur une page prédéterminée. Un membre d'équipage n'a pas à manoeuvrer de multiples interfaces à cet effet ce qui réduit de fait sa charge de travail.

Un membre d'équipage peut alors valider la proposition de masse, voire peut modifier cette proposition de masse avant de la valider. L'étape de validation permet de garantir qu'un membre d'équipage surveille l'opération de chargement. En effet, un membre d'équipage peut, par exemple, ainsi détecter une défaillance si la proposition de masse est aberrante au regard de la charge à transporter. A titre illustratif, si la charge à transporter est un pylône et que la proposition de masse est de 100 grammes, un pilote peut détecter un dysfonctionnement. Le pilote peut choisir d'interrompre la mission par sécurité ou peut modifier la proposition de masse.

Si aucune action n'est entreprise par un membre d'équipage suite à l'affichage de la proposition de masse à l'issue d'une condition prédéterminée, alors le système avionique affecte une masse prédéterminée supérieure à zéro à la masse de calcul. Par exemple, la masse prédéterminée est égale à la masse maximale autorisée par le constructeur de l'aéronef pour la charge à transporter. Selon un autre exemple, la masse prédéterminée est supérieure à cette masse maximale afin de pénaliser l'équipage qui n'a pas pris le soin de valider, éventuellement après l'avoir modifiée, la proposition de masse affichée.

Dès lors, ce procédé permet de garantir la réalisation d'un paramétrage d'une masse de calcul qui représente une estimation de la masse de la charge à transporter. Une proposition de masse est fournie à un équipage qui peut aisément la valider, éventuellement après l'avoir modifiée. Si l'équipage se désintéresse de cet aspect, la masse de calcul est fixée automatiquement à une masse prédéterminée permettant de garantir la prise en compte de la charge à transporter de manière sécuritaire.

Le procédé peut de plus comporter une ou plusieurs des caractéristiques qui suivent, prises seules ou en combinaison.

Comme décrit précédemment, préalablement à la validation de la proposition de masse, le procédé peut comporter une modification de la proposition de masse avec une interface de modification.

Selon une possibilité compatible avec les précédentes, le système d'accrochage pouvant avoir un crochet pouvant être fermé ou ouvert et configuré pour porter ladite charge à transporter, ladite détection qu'un état courant de l'aéronef est un état de vol avec la charge à transporter attachée au système d'accrochage peut comporter une détection que le crochet est fermé.

Le système d'accrochage peut avoir un senseur usuel pour déterminer si le crochet est ouvert ou fermé. Un tel crochet doit en effet être fermé lorsqu'une charge à transporter est attachée à ce crochet.

Si le crochet est ouvert, le système avionique peut considérer que l'aéronef ne porte pas de charge. Aucune proposition de masse à paramétrer n'est alors affichée.

Selon une possibilité compatible avec les précédentes, ladite détection qu'un état courant de l'aéronef est un état de vol avec la charge à transporter attachée au système d'accrochage peut comporter une détection que l'aéronef est en vol.

Le système avionique peut comprendre un senseur usuel de détermination que l'aéronef est en vol, à savoir pour détecter que l'aéronef ne repose pas sur le sol. Par exemple, un tel senseur mesure une force exercée sur un atterrisseur ou une hauteur de l'aéronef.

Si l'aéronef repose sur le sol, le système avionique peut considérer que l'aéronef ne porte pas une charge à transporter. Aucune proposition de masse à paramétrer n'est alors affichée.

Selon une possibilité compatible avec les précédentes, ladite détection qu'un état courant de l'aéronef est un état de vol avec la charge à transporter attachée au système d'accrochage peut comporter une détection que le système d'accrochage porte la charge à transporter.

Le système avionique peut comprendre un senseur usuel de détermination que l'aéronef porte une charge. Par exemple, un tel senseur mesure une masse de la charge à transporter, par exemple en comprenant un capteur de charge intégré à un crochet. Un tel senseur peut s'avérer plus complexe en prenant en considération le fonctionnement global de l'aéronef selon un procédé usuel.

Si l'aéronef ne porte pas de charge à transporter, aucune proposition de masse à paramétrer n'est alors affichée.

Le système avionique peut cumuler plusieurs des conditions précitées. Par exemple, le système avionique peut estimer que l'aéronef est dans l'état de vol avec la charge à transporter attachée au système d'accrochage quand l'aéronef porte une charge, en vol avec le crochet fermé.

Selon une possibilité compatible avec les précédentes, le système d'accrochage pouvant avoir un crochet pouvant être fermé ou ouvert et configuré pour porter ladite charge, le procédé peut comporter une génération d'une alerte en présence d'une détection que le crochet est ouvert alors que l'aéronef est en vol et porte ladite charge avec le système d'accrochage.

Selon une possibilité compatible avec les précédentes, ladite proposition de masse peut avoir une valeur mémorisée.

Cette possibilité peut notamment être implémentée en l'absence d'un système permettant d'estimer la masse de la charge à transporter.

Alternativement, le procédé peut comporter une estimation d'une valeur estimée de la charge à transporter, ladite proposition de masse étant égale à ladite valeur estimée.

Par exemple, un senseur de masse évalue la masse dite « masse estimée » de la charge à transporter selon une certaine fréquence. La proposition de masse affichée peut ainsi varier selon ladite fréquence.

Le procédé peut alors comporter une phase de stabilisation de l'aéronef, afin que la mesure de la masse estimée soit optimisée.

Selon une possibilité compatible avec les précédentes, une condition prédéterminée peut être un vol de l'aéronef à une vitesse d'avancement supérieure à une vitesse seuil pendant une durée mémorisée.

A titre d'exemple, la vitesse seuil est fixée à 50 noeuds soit 92.6 kilomètres par heure, et/ou la durée mémorisée est de l'ordre d'une minute.

Cette caractéristique présente l'avantage d'attendre que l'aéronef soit dans une phase de vol durant laquelle le pilote a une charge de travail plus faible et durant laquelle l'aéronef est suffisamment stable, le cas échéant pour qu'un senseur de masse éventuel évalue la masse estimée de la charge à transporter.

Ainsi, lorsque l'aéronef a une vitesse d'avancement, par exemple une vitesse air, supérieure à la vitesse seuil, cet aéronef est relativement stable. Une proposition de masse basée sur une mesure est alors fiable. En outre, la durée prédéterminée laisse à un pilote le temps de valider, et éventuellement de modifier, la proposition de masse.

Selon une possibilité compatible avec les précédentes, ledit affichage sur ledit afficheur d'une proposition de masse peut comporter un affichage d'une page de gestion de véhicule sur l'afficheur, ladite page de gestion de véhicule comprenant une zone affichant ladite proposition de masse.

L'afficheur bascule automatiquement sur la page de gestion de véhicule VMS ce qui facilite le travail d'un équipage de l'aéronef.

Selon une possibilité compatible avec les précédentes, le procédé peut comporter une affectation d'une valeur prédéterminée à la masse de calcul lorsque l'aéronef repose sur le sol.

Lorsque l'aéronef est au sol, la masse de calcul peut être fixée à une valeur mémorisée, et par exemple élevée par sécurité. La valeur prédéterminée peut être égale à la masse prédéterminée précitée à savoir supérieure ou égale à la masse maximale certifiée.

Eventuellement, le système avionique peut par contre afficher une valeur nulle pour ce paramètre. Par exemple, la page de gestion affiche le chiffre « 0 », éventuellement dans la zone dédiée à la masse de la charge à transporter.

L'invention vise en outre un procédé de détermination d'une masse totale d'un aéronef, ledit aéronef ayant un système avionique, le système avionique étant configuré pour calculer la masse totale de l'aéronef, l'aéronef ayant un système d'accrochage portant une charge à transporter.

Le procédé de détermination d'une masse totale d'un aéronef comporte un paramétrage d'une masse de calcul de ladite charge à transporter en appliquant le procédé de paramétrage précité, et un calcul de ladite masse totale en fonction de la masse de calcul. Par exemple, la masse totale est égale à la somme d'une masse à vide, d'une masse du ou des individus présents dans l'aéronef, d'une masse de fret présent dans l'aéronef et de la masse de calcul.

L'invention vise en outre un procédé de pilotage d'un aéronef, ledit aéronef ayant un système avionique, le système avionique étant configuré pour calculer une limite à respecter en fonction d'une masse totale de l'aéronef, l'aéronef ayant un système d'accrochage portant une charge.

Le procédé de pilotage comporte un paramétrage d'une masse de calcul de ladite charge en appliquant le procédé de paramétrage de l'invention, et un calcul de ladite limite en fonction de la masse de calcul.

Le procédé de pilotage peut présenter une génération d'une alerte avec un alerteur lorsqu'un paramètre associé à ladite limite présente une valeur supérieure à la limite. Par exemple, la limite peut être une limite maximale de couple moteur comparé à un couple moteur développé par un moteur de l'aéronef.

Le procédé de pilotage peut présenter un pilotage automatique de l'aéronef avec un système de pilotage automatique en fonction de la masse de calcul.

L'invention vise en outre, un programme d'ordinateur qui comprend des instructions qui, lorsque ledit programme d'ordinateur est exécuté par un système avionique, conduisent ledit système avionique à mettre en oeuvre le procédé de paramétrage.

L'invention vise en outre un aéronef muni d'un système avionique ainsi que d'un système d'accrochage, le système avionique ayant un afficheur. Le système avionique est configuré pour mettre en oeuvre le procédé de paramétrage de l'invention, voir un calcul de ladite limite en fonction de la masse de calcul.

L'aéronef peut comporter un senseur de masse configuré pour émettre un signal variant en fonction d'une masse de la charge à transporter.

En outre, le système avionique peut comporter un ou plusieurs des senseurs suivants : un senseur de détermination que l'aéronef est en vol, un senseur de vitesse de déplacement, un chronomètre, un senseur détectant un état fermé ou ouvert d'un crochet du système d'accrochage.

L'invention et ses avantages apparaîtront avec plus de détails dans le cadre de la description qui suit avec des exemples donnés à titre illustratif en référence aux figures annexées qui représentent :
la figure 1, un schéma illustrant un aéronef selon l'invention, et
la figure 2, un schéma illustrant un procédé de paramétrage selon l'invention et un procédé de pilotage mettant en oeuvre ce procédé de paramétrage.

Les éléments présents dans plusieurs figures distinctes sont affectés d'une seule et même référence.

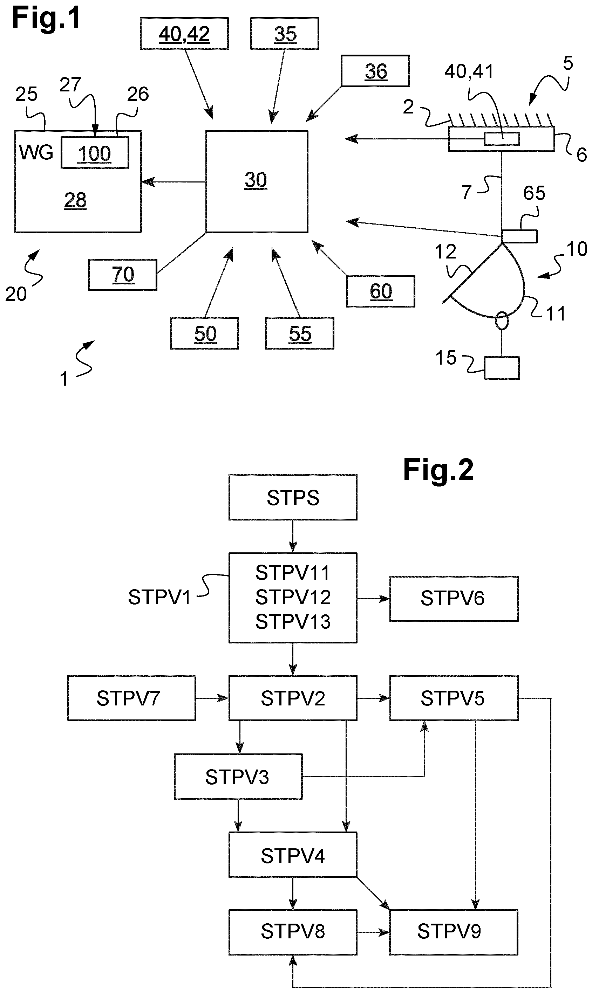

La figure 1 illustre un aéronef 1 selon l'invention de manière schématique. Cet aéronef 1 peut par exemple comprendre une voilure tournante non représentée.

Par ailleurs, l'aéronef 1 est muni d'un système d'accrochage 5 pour pouvoir porter une charge à transporter 15. Par exemple, le système d'accrochage 5 est muni d'un crochet 10 pouvant être attaché à un anneau solidaire de la charge à transporter 15. Ce crochet 10 peut être suspendu à une élingue 7. L'élingue 7 peut être accrochée à une structure porteuse 2 de l'aéronef 1. En particulier, l'élingue 7 peut être accrochée à une structure porteuse 2 de l'aéronef 1 par un treuil 6 ou par un système de suspension usuel. Eventuellement, le crochet 10 peut être attaché directement à la structure porteuse 2 de l'aéronef 1 ou à un système de suspension usuel.

Indépendamment de la manière de lier le crochet 10 à la structure porteuse 2 de l'aéronef 1, le crochet 10 peut comprendre un corps 11 ouvert, sensiblement en forme de C par exemple, et un fermoir 12 apte à fermer ou ouvrir un espace délimité par le crochet 10. En l'absence d'une charge à transporter 15, le crochet 10 peut être ouvert, alors qu'en présence d'une charge à transporter 15 le crochet 10 peut être fermé en accolant le fermoir 12 au corps 11.

Par ailleurs, l'aéronef 1 est muni d'un système avionique 20.

Le système avionique 20 comporte un afficheur 25. L'afficheur 25 peut comprendre un écran, une face illuminée par un système de projection, etc. Le terme « afficheur » désigne un système apte à afficher une image visible par un membre d'équipage.

L'afficheur 25 peut être configuré pour afficher une pluralité de pages. Une page, et par exemple une page de gestion de véhicule 28, comporte une zone 26 configurée pour présenter une proposition de masse 27 de la charge à transporter 15, à savoir une proposition de 100 kilogrammes selon l'exemple illustré en face d'un intitulé WG représentant la masse de la charge à transporter.

Le système avionique 20 peut comprendre un calculateur 30. Un tel calculateur 30 peut comprendre au moins une unité de traitement. Une unité de traitement peut comprendre par exemple au moins un processeur et au moins une mémoire, au moins un circuit intégré, au moins un système programmable, au moins un circuit logique, ces exemples ne limitant pas la portée donnée à l'expression « unité de traitement ». Le terme processeur peut désigner aussi bien une unité centrale de traitement connue sous l'acronyme CPU, une unité graphique de traitement GPU, une unité digitale connue sous l'acronyme DSP, un microcontrôleur...

Le système avionique, et par exemple le calculateur 30, peuvent comprendre un programme d'ordinateur configuré pour appliquer un procédé selon l'invention.

Le système avionique 20, et par exemple le calculateur 30, peuvent être configurés pour calculer au moins une limite de l'aéronef ou d'un système de l'aéronef 1, ou une performance de l'aéronef 1 en fonction d'une masse estimée de la charge à transporter 15, cette masse étant dénommée « masse de calcul » par commodité.

Le système avionique 20 est configuré pour mettre en oeuvre notamment le procédé de paramétrage selon l'invention. A cet effet, le système avionique 20 peut comprendre un ou des senseurs.

Le terme « senseur » désigne un capteur physique capable de mesurer directement le paramètre en question mais aussi un système pouvant comprendre un ou plusieurs capteurs physiques ainsi que des moyens de traitement du signal permettant de fournir une estimation du paramètre à partir des mesures fournies par ce ou ces capteurs physiques. De manière similaire, le terme « mesure » désigne une mesure brute d'un senseur ou une mesure obtenue par un traitement de signal plus ou moins complexe à partir de mesures brutes.

Dès lors, l'aéronef 1 peut comprendre un senseur 65 détectant un état fermé ou ouvert du crochet 10 du système d'accrochage 5. Par exemple, un tel senseur 65 comporte un senseur de position mesurant la position du fermoir 12 par rapport au corps 11 du crochet 10. Le senseur 65 détectant un état fermé ou ouvert du crochet 10 du système d'accrochage 5 transmet au calculateur 30 un signal, analogique ou numérique, électrique ou optique, porteur de l'état ouvert ou fermé du crochet 10.

L'aéronef 1 peut comprendre un senseur de masse 40. Le senseur de masse 40 transmet, par exemple au calculateur 30, un signal, analogique ou numérique, électrique ou optique, variant en fonction de la masse de la charge à transporter 15. Par exemple, ce senseur de masse 40 peut comprendre un senseur 41 intégré au crochet 10, ou au treuil 6 éventuel selon l'exemple illustré, un système 42 évaluant le poids de la charge en fonction du comportement de l'aéronef 1 ou autres.

L'aéronef 1 peut comprendre un senseur 50 de détermination que l'aéronef 1 est en vol. Le senseur 50 de détermination que l'aéronef 1 est en vol transmet, par exemple au calculateur 30, un signal, analogique ou numérique, électrique ou optique, variant lorsque l'aéronef 1 décolle ou atterrit. Par exemple, le senseur 50 de détermination que l'aéronef 1 est en vol peut comprendre une radiosonde, un senseur mesurant un effort sur un atterrisseur...

L'aéronef 1 peut comprendre un senseur 55 de vitesse de déplacement. Le senseur 55 de vitesse de déplacement transmet, par exemple au calculateur 30, un signal, analogique ou numérique, électrique ou optique, variant en fonction de la vitesse de l'aéronef 1 par rapport au sol ou à l'air. Par exemple, le senseur 55 de vitesse de déplacement peut comprendre un récepteur d'un système de positionnement par satellites, un système à tube de Pitot...

L'aéronef 1 peut comprendre un instrument de mesure du temps 60, par exemple un chronomètre, en liaison avec le calculateur 30.

Par ailleurs, l'aéronef 1 peut comprendre diverses interfaces homme-machine. Par exemple, l'aéronef 1 peut comprendre une interface de validation 35 et/ou une interface de modification 36. Un même bouton peut former les deux interfaces de validation 35 et de modification 36.

La figure 2 illustre un procédé mis en oeuvre par le système avionique 20 pour paramétrer la masse de calcul.

Eventuellement, le procédé comporte une affectation STPS par le système avionique 20 d'une valeur prédéterminée à la masse de calcul lorsque l'aéronef 1 repose sur le sol.

Par exemple, le senseur 50 de détermination que l'aéronef 1 est en vol transmet un signal au calculateur 30 porteur d'une information indiquant que l'aéronef 1 est au sol. Le calculateur 30 attribue alors automatiquement à la masse de calcul la masse prédéterminée. Le calculateur 30 calcule alors au moins une limite et/ou au moins une performance en prenant en considération une masse élevée pour la charge à transporter 15.

Par ailleurs, le procédé comporte une détection STPV1, par le système avionique 20, que l'aéronef 1 se trouve dans un état de vol avec la charge à transporter 15 attachée au système d'accrochage 5.

Le système avionique 20, et par exemple le calculateur 30, peuvent considérer que l'aéronef 1 se trouve dans un état de vol avec la charge à transporter 15 attachée au système d'accrochage 5 lorsqu'un critère prédéterminé est rempli ou lorsque plusieurs critères prédéterminés sont remplis en même temps.

Ainsi, l'étape de détection STPV1 qu'un état courant de l'aéronef 1 est un état de vol avec la charge à transporter 15 attachée au système d'accrochage 5 peut comporter une détection STPV11 que le crochet 10 est fermé.

Le senseur 65 détectant un état fermé ou ouvert du crochet 10 transmet par exemple un signal au calculateur 30 porteur d'une information indiquant que le crochet 10 est fermé. A réception, le calculateur 30 en déduit que le crochet 10 est fermé.

L'étape de détection STPV1 qu'un état courant de l'aéronef 1 est un état de vol avec la charge à transporter 15 attachée au système d'accrochage 5 peut comporter une détection STPV12 que l'aéronef 1 est en vol.

Le senseur 50 de détermination que l'aéronef 1 est en vol transmet par exemple un signal au calculateur 30 porteur d'une information indiquant que l'aéronef est en vol ou au sol. A réception, le calculateur 30 en déduit que l'aéronef 1 est en vol ou au sol. Par exemple, le senseur 50 de détermination que l'aéronef 1 est en vol comporte une radiosonde qui transmet un signal porteur d'une hauteur courante de l'aéronef 1, le calculateur 30 concluant que l'aéronef 1 est en vol lorsque la hauteur courante est supérieure à un seuil mémorisé. Selon un autre exemple, le senseur 50 de détermination que l'aéronef 1 est en vol comporte un senseur mesurant une force sur un atterrisseur, le calculateur 30 concluant que l'aéronef 1 est en vol lorsque la force est inférieure à un seuil mémorisé.

L'étape de détection STPV1 qu'un état courant de l'aéronef 1 est un état de vol avec la charge à transporter 15 attachée au système d'accrochage 5 peut comporter une détection STPV13 que le système d'accrochage 5 porte une charge à transporter 15.

Le senseur de masse 40 transmet par exemple un signal au calculateur 30 porteur d'une masse estimée de la charge à transporter 15. A réception, le calculateur 30 conclut que l'aéronef 1 porte une charge à transporter 15 lorsque la masse estimée est supérieure à un seuil de masse, par exemple de 0 kilogramme.

Dans ce contexte, le système avionique 20, et par exemple le calculateur 30, peuvent considérer que l'aéronef 1 se trouve dans un état de vol avec la charge à transporter 15 attachée au système d'accrochage 5 lorsqu'à un instant :
- le crochet 10 est fermé, et/ou
- l'aéronef 1 est en vol, à savoir ne repose pas sur le sol, et/ou
- une charge à transporter 15 est portée par l'aéronef 1.

Eventuellement, le procédé comporte une génération STPV6 d'une alerte avec un alerteur 70 en présence d'une détection que le crochet 10 est ouvert alors que l'aéronef 1 est en vol et porte une charge à transporter 15 avec le système d'accrochage 5. Par exemple, le calculateur 30 transmet un signal d'alerte analogique ou numérique, électrique ou optique à l'alerteur 70, cet alerteur 70 générant en conséquence une alerte visuelle, sonore, voire haptique.

Si l'état courant de l'aéronef 1 est l'état de vol avec la charge à transporter 15 attachée au système d'accrochage 5, le procédé comporte un affichage STPV2 sur l'afficheur 25 d'une proposition de masse 27.

Par exemple, le système avionique 20 affiche automatiquement sur l'afficheur 25 la page 28 de gestion de véhicule, et indique la proposition de masse 27 dans la zone 26 dédiée.

Selon une possibilité, la proposition de masse 27 a une valeur mémorisée dans le système avionique 20, et par exemple dans le calculateur 30.

Alternativement, le procédé peut comporter une estimation STPV7, par le système avionique 20, d'une valeur estimée de la charge à transporter 15. La proposition de masse 27 prend alors la valeur de la valeur estimée.

Par exemple, le senseur de masse 40 transmet un signal au calculateur 30 porteur d'une masse estimée de la charge à transporter 15. La proposition de masse affichée peut avoir une valeur qui change selon une fréquence de rafraichissement prédéterminée.

Suite à l'affichage STPV2 sur l'afficheur 25 d'une proposition de masse, un membre d'équipage a pour instructions de valider la proposition de masse, ou de la modifier et de la valider.

Ainsi, le procédé peut comporter une validation STPV4 de la proposition de masse 27 à l'aide d'une interface de validation 35. La masse de calcul prend alors la valeur de la proposition de masse 27 validée.

Alternativement, le procédé peut comporter une modification STPV3 de la proposition de masse 27 avec une interface de modification 36, puis l'étape de validation STPV4 précitée.

Toutefois, le membre d'équipage peut oublier de valider la proposition de masse.

Ainsi, en l'absence d'une validation STPV4 de la proposition de masse 27, à l'issue d'une condition prédéterminée, le procédé comporte une affectation STPV5, par le système avionique 20, d'une masse prédéterminée supérieure à zéro à la masse de calcul. Par exemple, le calculateur 30 affecte une masse élevée, voire plus élevée que la masse pouvant être portée par l'aéronef 1, à la masse de calcul.

Cette condition prédéterminée peut être définie pour laisser à un membre d'équipage le temps d'attendre une phase de vol nécessitant une charge de travail plus faible pour valider ou modifier la proposition de masse.

Par conséquent, la condition prédéterminée peut correspondre à un vol de l'aéronef 1 à une vitesse d'avancement supérieure à une vitesse seuil pendant une durée mémorisée.

Par exemple, si aucune action n'a été entreprise lorsque l'aéronef 1 vole à une vitesse supérieure ou égale à 50 noeuds pendant une minute, le système avionique affecte la masse prédéterminée à la masse de calcul. Avant cette affectation forcée et automatique, la masse de calcul peut être la masse de calcul paramétrée au sol.

Par ailleurs, le système avionique 20 peut effectuer un calcul STPV8 d'une masse totale de l'aéronef 1 en fonction de la masse de calcul.

Par ailleurs, le système avionique 20 peut effectuer un calcul STPV9 d'au moins une limite à respecter en fonction de la masse de calcul, voire de la masse totale. A titre illustratif, le système avionique 20 calcule une limite de couple moteur, et éventuellement une marge de couple entre le couple courant développé par un moteur et la limite de couple moteur. Éventuellement, la limite et/ou la marge entre cette limite et la valeur courante du paramètre associé sont affichées sur un dispositif d'affichage du système avionique, et éventuellement sur une page pouvant être affichée sur l'afficheur. Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles.

## Revendications

1. Procédé pour paramétrer dans un aéronef (1) une masse de calcul prise en considération par un système avionique (20) de l'aéronef (1), la masse de calcul étant relative à une charge à transporter (15) portée par un système d'accrochage (5) de l'aéronef (1), ledit système avionique (20) ayant un afficheur (25), le procédé comportant:
- détection (STPV1) qu'un état courant de l'aéronef (1) est un état de vol avec la charge à transporter (15) attachée au système d'accrochage (5),
- sous condition que ledit état courant soit l'état de vol avec la charge à transporter (15) attachée au système d'accrochage (5), affichage (STPV2) sur ledit afficheur (25) d'une proposition de masse (27),
- suite à l'affichage (STPV2) sur ledit afficheur (25) d'une proposition de masse, validation (STPV4) de la proposition de masse (27) à l'aide d'une interface de validation (35), la proposition de masse (27) étant affectée à la masse de calcul, le procédé étant **caractérisé par** l'étape additionnelle suivante:
- en l'absence d'une validation (STPV4) de la proposition de masse (27) à l'issue d'une condition prédéterminée, affection (STPV5) d'une masse prédéterminée supérieure à zéro à la masse de calcul.

2. Procédé selon la revendication 1,
**caractérisé en ce que** préalablement à la validation (STPV4) de la proposition de masse (27), le procédé comporte une modification (STPV3) de la proposition de masse (27) avec une interface de modification (36).

3. Procédé selon l'une quelconque des revendications 1 à 2, **caractérisé en ce que**, le système d'accrochage (5) ayant un crochet (10) pouvant être fermé ou ouvert et configuré pour porter ladite charge à transporter (15), ladite détection qu'un état courant de l'aéronef (1) est un état de vol avec la charge à transporter (15) attachée au système d'accrochage (5) comporte une détection (STPV11) que le crochet (10) est fermé.

4. Procédé selon l'une quelconque des revendications 1 à 3, **caractérisé en ce que** ladite détection (STPV1 ) qu'un état courant de l'aéronef (1) est un état de vol avec la charge à transporter (15) attachée au système d'accrochage (5) comporte une détection (STPV12) que l'aéronef (1) est en vol.

5. Procédé selon l'une quelconque des revendications 1 à 4, **caractérisé en ce que** ladite détection (STPV1 ) qu'un état courant de l'aéronef (1) est un état de vol avec la charge à transporter (15) attachée au système d'accrochage (5) comporte une détection (STPV13) que le système d'accrochage (5) porte la charge à transporter (15).

6. Procédé l'une quelconque des revendications 1 à 5,
**caractérisé en ce que**, le système d'accrochage (5) ayant un crochet (10) pouvant être fermé ou ouvert et configuré pour porter ladite charge à transporter (15), le procédé comporte une génération (STPV6) d'une alerte en présence d'une détection que le crochet (10) est ouvert alors que l'aéronef (1) est en vol et porte ladite charge à transporter (15) avec le système d'accrochage (5).

7. Procédé selon l'une quelconque des revendications 1 à 6, **caractérisé en ce que** ladite proposition de masse (27) a une valeur mémorisée.

8. Procédé selon l'une quelconque des revendications 1 à 6, **caractérisé en ce que** le procédé comporte une estimation (STPV7) d'une valeur estimée de la charge à transporter (15), ladite proposition de masse (27) étant égale à ladite valeur estimée.

9. Procédé selon l'une quelconque des revendications 1 à 8, **caractérisé en ce que** ladite condition prédéterminée est un vol de l'aéronef (1) à une vitesse d'avancement supérieure à une vitesse seuil pendant une durée mémorisée.

10. Procédé selon l'une quelconque des revendications 1 à 9, **caractérisé en ce que** ledit affichage (STPV2) sur ledit afficheur (25) d'une proposition de masse (27) comporte un affichage d'une page (28) de gestion de véhicule sur l'afficheur (25), ladite page (28) de gestion de véhicule comprenant une zone (26) affichant ladite proposition de masse (27).

11. Procédé selon l'une quelconque des revendications 1 à 10, **caractérisé en ce que** le procédé comporte une affectation (STPS) d'une valeur prédéterminée à la masse de calcul lorsque l'aéronef (1) repose sur le sol.

12. Procédé de détermination d'une masse totale d'un aéronef (1), ledit aéronef (1) ayant un système avionique (20), le système avionique (20) étant configuré pour calculer la masse totale de l'aéronef (1), l'aéronef (1) ayant un système d'accrochage (5) portant une charge à transporter (15),
**caractérisé en ce que** le procédé de détermination d'une masse totale d'un aéronef (1) comporte un paramétrage d'une masse de calcul de ladite charge à transporter (15) en appliquant le procédé de paramétrage selon l'une quelconque des revendications 1 à 11, et un calcul (STPV8) de ladite masse totale en fonction de la masse de calcul.

13. Procédé de pilotage d'un aéronef (1), ledit aéronef (1) ayant un système avionique (20), le système avionique (20) étant configuré pour calculer une limite à respecter en fonction d'une masse totale de l'aéronef (1), l'aéronef (1) ayant un système d'accrochage (5) portant une charge à transporter (15),
**caractérisé en ce que** le procédé de pilotage comporte un paramétrage d'une masse de calcul de ladite charge à transporter (15) en appliquant le procédé de paramétrage selon l'une quelconque des revendications 1 à 11, et un calcul (STPV9) de ladite limite en fonction de la masse de calcul.

14. Programme d'ordinateur comprenant des instructions qui, lorsque ledit programme d'ordinateur est exécuté par un système avionique (20), conduisent ledit système avionique (20) à mettre en oeuvre le procédé de paramétrage selon l'une quelconque des revendications 1 à 11.

15. Aéronef (1) muni d'un système avionique (20) ainsi que d'un système d'accrochage (5), le système avionique (20) ayant un afficheur (25),
**caractérisé en ce que** le système avionique (20) est configuré pour mettre en oeuvre le procédé de paramétrage selon l'une quelconque des revendications 1 à 11.

16. Aéronef selon la revendication 15,
**caractérisé en ce que** l'aéronef (1) comporte un senseur de masse (40) configuré pour émettre un signal variant en fonction d'une masse de la charge à transporter (15).

17. Aéronef selon l'une quelconque des revendications 15 à 16, **caractérisé en ce que** le système avionique (20) comporte un ou plusieurs des senseurs suivants : un senseur (50) de détermination que l'aéronef est en vol, un senseur (55) de vitesse de déplacement, un chronomètre (60), un senseur (65) détectant un état fermé ou ouvert d'un crochet (10) du système d'accrochage (5).

## Patentansprüche

1. Verfahren zum Parametrieren einer Berechnungsmasse in einem Luftfahrzeug (1), die von einem Avioniksystem (20) des Luftfahrzeugs (1) berücksichtigt wird, wobei die Berechnungsmasse sich auf eine zu transportierende Last (15) bezieht, die von einem Aufhängungssystem (5) des Luftfahrzeugs (1) getragen wird, wobei das Avioniksystem (20) eine Anzeige (25) aufweist, wobei das Verfahren umfasst:
- Erkennen (STPV1), dass ein aktueller Zustand des Luftfahrzeugs (1) ein Flugzustand ist, bei dem die zu transportierende Last (15) an dem Aufhängungssystem (5) befestigt ist,
- unter der Bedingung, dass der aktuelle Zustand der Flugzustand mit der am Aufhängungssystem (5) befestigten zu transportierenden Last (15) ist, Anzeigen (STPV2) eines Massenvorschlags (27) auf der Anzeige (25),
- im Anschluss an das Anzeigen (STPV2) eines Massenvorschlags auf der Anzeige (25), Validieren (STPV4) des Massenvorschlags (27) mit Hilfe einer Validierungsschnittstelle (35), wobei der Massenvorschlag (27) der Berechnungsmasse zugewiesen wird,
wobei das Verfahren **gekennzeichnet ist durch** den folgenden zusätzlichen Schritt:
- wenn keine Validierung (STPV4) des Massenvorschlags (27) nach einer vorgegebenen Bedingung erfolgt, Zuweisen (STPV5) einer vorgegebenen Masse größer als Null als Berechnungsmasse.

2. Verfahren nach Anspruch 1,
**dadurch gekennzeichnet, dass** vor dem Validieren (STPV4) des Massenvorschlags (27) das Verfahren ein Modifizieren (STPV3) des Massenvorschlags (27) mit einer Modifikationsschnittstelle (36) umfasst.

3. Verfahren nach einem der Ansprüche 1 bis 2,
**dadurch gekennzeichnet, dass** das Aufhängungssystem (5) einen Haken (10) aufweist, der geschlossen oder geöffnet werden kann und konfiguriert ist, um die zu transportierende Last (15) zu tragen, wobei das Erkennen, dass ein aktueller Zustand des Luftfahrzeugs (1) ein Flugzustand ist, bei dem die zu transportierende Last (15) an dem Aufhängungssystem (5) befestigt ist, ein Erkennen (STPV11) umfasst, dass der Haken (10) geschlossen ist.

4. Verfahren nach einem der Ansprüche 1 bis 3,
**dadurch gekennzeichnet, dass** das Erkennen (STPV1), dass ein aktueller Zustand des Luftfahrzeugs (1) ein Flugzustand ist, bei dem die zu transportierende Last (15) an dem Aufhängungssystem (5) befestigt ist, ein Erkennen (STPV12) umfasst, dass sich das Luftfahrzeug (1) im Flug befindet.

5. Verfahren nach einem der Ansprüche 1 bis 4,
**dadurch gekennzeichnet, dass** das Erkennen (STPV1), dass ein aktueller Zustand des Luftfahrzeugs (1) ein Flugzustand ist, bei dem die zu transportierende Last (15) an dem Aufhängungssystem (5) befestigt ist, ein Erkennen (STPV13) umfasst, dass das Aufhängungssystem (5) die zu transportierende Last (15) trägt.

6. Verfahren nach einem der Ansprüche 1 bis 5,
**dadurch gekennzeichnet, dass** das Aufhängungssystem (5) einen Haken (10) aufweist, der geschlossen oder geöffnet werden kann und konfiguriert ist, um die zu transportierende Last (15) zu tragen, und das Verfahren das Erzeugen (STPV6) einer Warnung bei Vorliegen einer Erfassung umfasst, dass der Haken (10) geöffnet ist, während sich das Luftfahrzeug (1) im Flug befindet und die zu transportierende Last (15) mit dem Aufhängungssystem (5) trägt.

7. Verfahren nach einem der Ansprüche 1 bis 6,
**dadurch gekennzeichnet, dass** der Massenvorschlag (27) einen gespeicherten Wert hat.

8. Verfahren nach einem der Ansprüche 1 bis 6,
**dadurch gekennzeichnet, dass** das Verfahren ein Schätzen (STPV7) eines Schätzwerts der zu transportierenden Last (15) umfasst, wobei der Massenvorschlag (27) gleich dem Schätzwert ist.

9. Verfahren nach einem der Ansprüche 1 bis 8,
**dadurch gekennzeichnet, dass** die vorgegebene Bedingung ein Flug des Luftfahrzeugs (1) mit einer Vorwärtsgeschwindigkeit über einer Schwellengeschwindigkeit für eine gespeicherte Zeitdauer ist.

10. Verfahren nach einem der Ansprüche 1 bis 9,
**dadurch gekennzeichnet, dass** das Anzeigen (STPV2) eines Massevorschlags (27) auf der Anzeige (25) ein Anzeigen einer Fahrzeugverwaltungsseite (28) auf der Anzeige (25) umfasst, wobei die Fahrzeugverwaltungsseite (28) einen Bereich (26) umfasst, der den Massevorschlag (27) anzeigt.

11. Verfahren nach einem der Ansprüche 1 bis 10,
**dadurch gekennzeichnet, dass** das Verfahren ein Zuweisen (STPS) eines vorgegebenen Wertes als Berechnungsmasse umfasst, wenn das Luftfahrzeug (1) auf dem Boden steht.

12. Verfahren zum Bestimmen einer Gesamtmasse eines Luftfahrzeugs (1), wobei das Luftfahrzeug (1) ein Avioniksystem (20) aufweist, wobei das Avioniksystem (20) konfiguriert ist, um die Gesamtmasse des Luftfahrzeugs (1) zu berechnen, wobei das Luftfahrzeug (1) ein Aufhängungssystem (5) aufweist, das eine zu transportierende Last (15) trägt,
**dadurch gekennzeichnet, dass** das Verfahren zum Bestimmen einer Gesamtmasse eines Luftfahrzeugs (1) ein Parametrieren einer Berechnungsmasse der zu transportierenden Last (15) durch Anwenden des Parametrierungsverfahrens nach einem der Ansprüche 1 bis 11 und ein Berechnen (STPV8) der Gesamtmasse in Abhängigkeit von der Berechnungsmasse umfasst.

13. Verfahren zum Steuern eines Luftfahrzeugs (1), wobei das Luftfahrzeug (1) ein Avioniksystem (20) aufweist und das Avioniksystem (20) konfiguriert ist, um eine einzuhaltende Grenze in Abhängigkeit von einer Gesamtmasse des Luftfahrzeugs (1) zu berechnen, wobei das Luftfahrzeug (1) ein Aufhängungssystem (5) aufweist, das eine zu transportierende Last (15) trägt,
**dadurch gekennzeichnet, dass** das Steuerverfahren ein Parametrieren einer Berechnungsmasse der zu transportierenden Last (15) durch Anwenden des Parametrierungsverfahrens nach einem der Ansprüche 1 bis 11 und ein Berechnen (STPV9) des Grenzwerts als Funktion der Berechnungsmasse umfasst.

14. Computerprogramm mit Anweisungen, die, wenn das Computerprogramm von einem Avioniksystem (20) ausgeführt wird, das Avioniksystem (20) dazu veranlassen, das Parametrierungsverfahren nach einem der Ansprüche 1 bis 11 auszuführen.

15. Luftfahrzeug (1) mit einem Avioniksystem (20) und einem Aufhängungssystem (5), wobei das Avioniksystem (20) eine Anzeige (25) aufweist,
**dadurch gekennzeichnet, dass** das Avioniksystem (20) konfiguriert ist, um das Parametrierungsverfahren nach einem der Ansprüche 1 bis 11 durchzuführen.

16. Luftfahrzeug nach Anspruch 15,
**dadurch gekennzeichnet, dass** das Luftfahrzeug (1) einen Massensensor (40) aufweist, der konfiguriert ist, um ein Signal auszugeben, das sich in Abhängigkeit von einer Masse der zu transportierenden Last (15) ändert.

17. Luftfahrzeug nach einem der Ansprüche 15 bis 16,
**dadurch gekennzeichnet, dass** das Avioniksystem (20) einen oder mehrere der folgenden Sensoren umfasst: einen Sensor (50) zur Bestimmung, dass sich das Luftfahrzeug im Flug befindet, einen Sensor (55) für die Bewegungsgeschwindigkeit, einen Zeitmesser (60), einen Sensor (65), der einen geschlossenen oder offenen Zustand eines Hakens (10) des Einhängesystems (5) erfasst.

## Claims

1. Method for parameterizing in an aircraft (1) a calculated mass taken into consideration by an avionic system (20) of the aircraft (1), the calculated mass being relative to a load (15) to be transported, supported by a mounting system (5) of the aircraft (1), said avionic system having a display unit (25),
the method including:
- detecting (STPV1) that a current state of the aircraft (1) is a state of flight with the load (15) to be transported attached to the mounting system (5),
- on condition that said current state is the state of flight with the load (15) to be transported attached to the mounting system (5), displaying (STPV2) a proposed mass (27) on said display unit (25),
- following the display (STPV2) on said display unit (25) of a proposed mass, validating (STPV4) the proposed mass (27) by means of a validation interface (35), the proposed mass (27) being assigned to the calculated mass,
the method being **characterised by** the following additional step:
- in the absence of any validation (STPV4) of the proposed mass (27) further to a predetermined condition, assigning (STPV5) a predetermined mass greater than zero to the calculated mass.

2. Method according to claim 1,
**characterised in that**, prior to validating (STPV4) the proposed mass (27), the method includes modifying (STPV3) the proposed mass (27) with a modification interface (36).

3. Method according to either one of claims 1 or 2,
**characterised in that**, since the mounting system (5) has a hook (10) able to be closed or open and configured to support said load (15) to be transported, said detection that a current state of the aircraft (1) is a state of flight with the load (15) to be transported attached to the mounting system (5) includes detecting (STPV11) that the hook (10) is closed.

4. Method according to any one of claims 1 to 3,
**characterised in that** said detection (STPV1) that a current state of the aircraft (1) is a state of flight with the load (15) to be transported attached to the mounting system (5) includes detecting (STPV12) that the aircraft (1) is airborne.

5. Method according to any one of claims 1 to 4,
**characterised in that** said detection (STPV1) that a current state of the aircraft (1) is a state of flight with the load (15) to be transported attached to the mounting system (5) includes detecting (STPV13) that the mounting system (5) supports the load (15) to be transported.

6. Method according to any one of claims 1 to 5,
**characterised in that**, since the mounting system (5) has a hook (10) able to be closed or open and configured to support said load (15) to be transported, the method includes generating (STPV6) a warning in the event of detecting that the hook (10) is open while the aircraft (1) is airborne and is supporting said load (15) to be transported with the mounting system (5).

7. Method according to any one of claims 1 to 6,
**characterised in that** said proposed mass (27) has a stored value.

8. Method according to any one of claims 1 to 6,
**characterised in that** the method includes estimating (STPV7) an estimated value of the load (15) to be transported, said proposed mass (27) being equal to said estimated value.

9. Method according to any one of claims 1 to 8,
**characterised in that** said predetermined condition is a flight of the aircraft (1) at a forward speed faster than a threshold speed for a stored duration.

10. Method according to any one of claims 1 to 9,
**characterised in that** said display (STPV2) on said display unit (25) of a proposed mass (27) includes a display of a vehicle management page (28) on the display unit (25), said vehicle management page (28) comprising a region (26) displaying said proposed mass (27).

11. Method according to any one of claims 1 to 10,
**characterised in that** the method includes assigning (STPS) a predetermined value to the calculated mass when the aircraft (1) is on the ground.

12. Method for determining a total mass of an aircraft (1), said aircraft (1) having an avionic system (20), the avionic system (20) being configured to calculate the total mass of the aircraft (1), the aircraft (1) having a mounting system (5) supporting a load (15) to be transported,
**characterised in that** the method for determining a total mass of an aircraft (1) includes parameterizing a calculated mass of said load (15) to be transported by applying the parameterizing method according to any one of claims 1 to 11, and calculating (STPV8) said total mass according to the calculated mass.

13. Method for piloting an aircraft (1), said aircraft (1) having an avionic system (20), the avionic system (20) being configured to calculate a limit to respect according to a total mass of the aircraft (1), the aircraft (1) having a mounting system (5) supporting a load (15) to be transported,
**characterised in that** the piloting method includes parameterizing a calculated mass of said load (15) to be transported by applying the parameterizing method according to any one of claims 1 to 11, and a calculation (STPV9) of said limit according to the calculated mass.

14. Computer programme comprising instructions which, when said computer programme is executed by an avionic system (20), cause said avionic system (20) to implement the parameterizing method according to one of claims 1 to 11.

15. Aircraft (1) equipped with an avionic system (20) and a mounting system (5), the avionic system having a display unit (25),
**characterised in that** the avionic system (20) is configured to implement the parameterizing method according to any one of claims 1 to 11.

16. Aircraft according to claim 15,
**characterised in that** the aircraft (1) includes a mass sensor (40) configured to emit a signal varying according to a mass of the load (15) to be transported.

17. Aircraft according to either one of claims 15 or 16,
**characterised in that** the avionic system (20) includes one or more of the following sensors: a sensor (50) for determining that the aircraft is airborne, a sensor (55) of forward speed, a chronometer (60), a sensor (65) for detecting a closed or an open state of a hook (10) of the mounting system (5).
